(19) Europäisches Patentamt
European Patent Office
Office européen des brevets

(11) EP 3 696 227 B1

(12) # EUROPEAN PATENT SPECIFICATION

(45) Date of publication and mention of the grant of the patent:
**19.07.2023 Bulletin 2023/29**

(21) Application number: **18887866.4**

(22) Date of filing: **14.08.2018**

(51) International Patent Classification (IPC):
***C08L 33/08*** *(2006.01)* ***C08K 5/00*** *(2006.01)*
***C08K 5/1515*** *(2006.01)* ***C08K 5/3412*** *(2006.01)*
***G02B 1/04*** *(2006.01)* ***G02B 1/14*** *(2015.01)*
***C08K 5/07*** *(2006.01)* ***C09J 7/30*** *(2018.01)*
***G02F 1/1333*** *(2006.01)* ***C09J 133/06*** *(2006.01)*

(52) Cooperative Patent Classification (CPC):
(C-Sets available)
**C09J 133/064; C08K 5/00; C08K 5/07; C08K 5/1515; C08K 5/3412; C08L 33/08; C09J 7/30; G02B 1/04; G02B 1/14; G02F 1/1333**

(Cont.)

(86) International application number:
**PCT/KR2018/009331**

(87) International publication number:
**WO 2019/117423 (20.06.2019 Gazette 2019/25)**

(54) **CROSSLINKABLE COMPOSITION**
VERNETZBARE ZUSAMMENSETZUNG
COMPOSITION RÉTICULABLE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.12.2017 KR 20170172983**

(43) Date of publication of application:
**19.08.2020 Bulletin 2020/34**

(73) Proprietor: **Shanjin Optoelectronics (Suzhou) Co.,LTD.**
**Suzhou, Jiangsu, 215699 (CN)**

(72) Inventor: **CHUN, Sang Ki**
**Daejeon 34122 (KR)**

(74) Representative: **Wang, Bo**
**Panovision IP**
**Ebersberger Straße 3**
**85570 Markt Schwaben (DE)**

(56) References cited:
**EP-A1- 2 889 351**
**JP-A- H08 259 922**
**JP-A- 2005 247 909**
**KR-A- 20070 041 238**
**KR-A- 20130 101 987**
**KR-A- 20130 113 372**
**KR-A- 20150 145 062**
**KR-A- 20170 101 774**
**US-A1- 2005 165 146**
**US-A1- 2015 093 533**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

(52) Cooperative Patent Classification (CPC): (Cont.)

C-Sets
**C09J 133/064, C08K 5/0025, C08K 5/07**

## Description

### Technical Field

The present application relates to a crosslinkable composition as defined in the appended claims.

### Background Art

Crosslinked layers of crosslinkable compositions such as pressure-sensitive adhesives or adhesives are used in various fields and applications. For example, various optical films such as a polarizing plate are applied to a display device such as an LCD (liquid crystal display) or an OLED (organic light emitting diode), where pressure-sensitive adhesives or adhesives are mainly used for attaching the optical film to the display device.

The pressure-sensitive adhesive is also applied to a surface protective film or the like for protecting an optical film applied to a display device.

Depending on the application, the pressure-sensitive adhesive or the adhesive may be imparted with conductivity, where a typical method of imparting conductivity to the pressure-sensitive adhesive or the adhesive is a method of combining an ionic compound to the relevant pressure-sensitive adhesive or adhesive.

US 2005/165146 A1, JP H08 259922 A, JP 2005 247909A, US 2015/093533 A1 and EP 2 889 351 A1 relates to pressure-sensitive adhesive compositions.

### Disclosure

### Technical Problem

The present application relates to a crosslinkable composition. It is an object of the present application to provide a crosslinkable composition in which excellent crosslinking efficiency is ensured even when an ionic compound is blended in the crosslinkable composition.

### Technical Solution

The present application relates to a crosslinkable composition. In the present application, the term crosslinkable composition may refer to a composition comprising a component capable of realizing a crosslinked structure by a chemical or physical method, mainly a component capable of realizing a crosslinked structure by a chemical method.

The crosslinkable composition may be, for example, a pressure-sensitive adhesive composition or an adhesive composition. The term pressure-sensitive adhesive composition is a composition which can act as a pressure-sensitive adhesive or can act as a pressure-sensitive adhesive after crosslinking, and the adhesive composition is a composition which can act as an adhesive or can act as an adhesive after crosslinking.

Here, the definitions of the pressure-sensitive adhesive and the adhesive follow definitions known in the art.

The crosslinkable composition may comprise an acrylic polymer. The term acrylic polymer is a polymer containing an acrylic monomer unit as a main component. In this specification, the term unit of any monomer contained in a polymer means a state where the relevant monomer is included in the polymer through polymerization reaction. In addition, in this specification, the fact that any component A is contained as a main component in the other component B may mean a case where the ratio of the component A in the component B is included in a ratio of about 55 wt% or more, 60 wt% or more, 70 wt% or more, 75 wt% or more, 80 wt% or more, 85 wt% or more, or about 90 wt% or more based on the total weight of the component B. The upper limit of the ratio is not particularly limited, which may be, for example, about 98 wt% or less, or about 95 wt% or less.

Also, in this specification, the term acrylic monomer means acrylic acid or methacrylic acid, or a derivative of acrylic acid or methacrylic acid such as acrylic acid ester or methacrylic acid ester.

In addition, the term (meth)acrylic herein means acrylic or methacrylic.

In the crosslinkable composition of the present application, the acrylic polymer may be contained as a main component.

The acrylic polymer may be a pressure-sensitive adhesive polymer or an adhesive polymer. The term pressure-sensitive adhesive or adhesive polymer means a polymer whose physical properties such as its glass transition temperature are adjusted so that pressure-sensitive adhesive performance or adhesive performance can be exhibited before and/or after crosslinking, and the construction of such polymers is well known in the relevant field.

In one example, the acrylic polymer may comprise an alkyl (meth)acrylate unit. Here, the alkyl group contained in the alkyl (meth)acrylate may be a linear, branched or cyclic alkyl group having 1 to 20 carbon atoms, 1 to 16 carbon atoms, 1 to 12 carbon atoms, 1 to 8 carbon atoms or 4 to 8 carbon atoms.

Such an alkyl (meth)acrylate can be exemplified by methyl (meth)acrylate, ethyl (meth)acrylate, n-propyl (meth)acrylate or isopropyl (meth)acrylate, n-butyl (meth)acrylate, t-butyl (meth)acrylate, sec-butyl (meth)acrylate, pentyl (meth)acrylate, 2-ethylhexyl (meth)acrylate, 2-ethylbutyl (meth)acrylate, n-octyl (meth)acrylate, isooctyl (meth)acrylate, isononyl (meth)acrylate, lauryl (meth)acrylate and tetradecyl (meth)acrylate, and the like, and one or two or more of these can be applied. Generally, n-butyl acrylate or 2-ethylhexyl acrylate, and the like are used.

The alkyl (meth)acrylate unit may be contained as a main component in the acrylic polymer.

The acrylic polymer may also be a crosslinkable polymer having a crosslinkable functional group. The crosslinkable functional group can be introduced by incorporating a unit of a monomer having a crosslinkable functional group (hereinafter, may be referred to as a crosslinkable monomer) into the polymer. As the crosslinkable functional group, a hydroxyl group or a carboxyl group can generally be applied.

Therefore, as the crosslinkable monomer, for example, a hydroxyl group-containing monomer or a carboxyl group-containing monomer may be applied. The specific kind of each crosslinkable monomer is not particularly limited, and monomers known in the art can be used.

For example, as the hydroxyl group-containing monomer, hydroxyalkyl (meth)acrylates having a hydroxyalkyl group having a carbon number in a range of 1 to 12, such as hydroxyethyl (meth)acrylate, 3-hydroxypropyl (meth)acrylate, 4-hydroxybutyl (meth)acrylate and/or 6-hydroxyhexyl (meth)acrylate, can be used, and as the carboxyl group-containing monomer, (meth)acrylic acid, 2-(meth)acryloyloxy **acetic** acid, 3-(meth)acryloyloxypropionic acid, 4-(meth)acryloyloxybutyric acid, acrylic acid dimer, itaconic acid, maleic acid and/or maleic anhydride, and the like can be used.

In present claim 1, in order to realize high peel force, a carboxyl group-containing monomer of the above monomers is used.

The ratio of the crosslinkable monomer unit is selected in consideration of the desired cohesive force or the like and is not particularly limited, but the unit may generally be included in the polymer in a ratio range of about 0.01 to about 10 parts by weight relative to 100 parts by weight of the alkyl (meth)acrylate unit. In another example, the ratio of the monomer unit may be about 0.05 part by weight or more, 0.1 part by weight or more, 0.5 part by weight or more, 1 part by weight or more, 1.5 parts by weight or more, 2 parts by weight or more, 2.5 parts by weight or more, 3 parts by weight or more, 3.5 parts by weight or more, 4 parts by weight or more, 4.5 parts by weight or more, or about 5 parts by weight or more, and may also be about 9.5 parts by weight or less, 9 parts by weight or less, 8.5 parts by weight or less, 8 parts by weight or less, 7.5 parts by weight or less, 7 parts by weight or less, 6.5 parts by weight or less, or about 6 parts by weight or less.

The acrylic polymer may comprise other monomer units, if necessary, in addition to the above-mentioned monomer units, where the kind thereof is not particularly limited. The monomer unit which may be further contained includes an aromatic group-containing monomer unit, for example, a (meth)acrylate unit having an aromatic ring. Such a unit may be used to obtain a so-called optical compensation effect, or may be applied for other reasons.

The kind of the aromatic group-containing monomer capable of forming such a unit is not particularly limited, which can be exemplified by, for example, a monomer of Formula 6 below.

[Formula 6]

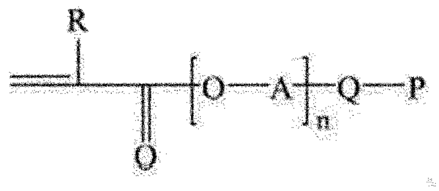

In Formula 6, R represents hydrogen or alkyl, A represents alkylene, n represents an integer in a range of 0 to 3, Q represents a single bond, -O-, -S- or alkylene, and P represents an aromatic ring.

In Formula 6, the single bond means a case that the atomic groups on both sides are directly bonded without mediating a separate atom.

In Formula 6, R may be, for example, hydrogen or alkyl having 1 to 4 carbon atoms, or may be hydrogen, methyl or ethyl.

In the definition of Formula 6, A may be alkylene having 1 to 12 carbon atoms or 1 to 8 carbon atoms, and may be, for example, methylene, ethylene, hexylene or octylene.

In Formula 6, n may be, for example, a number in a range of 0 to 2, or may be 0 or 1.

In Formula 6, Q may be a single bond, -O- or -S-.

In Formula 6, P is a substituent derived from an aromatic compound, which may be, for example, a functional group derived from an aromatic ring having 6 to 20 carbon atoms, for example, phenyl, biphenyl, naphthyl or anthracenyl.

In Formula 6, the aromatic ring may be optionally substituted by one or more substituents, where a specific example of the substituent may include halogen or alkyl, or halogen or alkyl having 1 to 12 carbon atoms, or chlorine, bromine, methyl, ethyl, propyl, butyl, nonyl or dodecyl, but is not limited thereto.

A specific example of the compound of Formula 6 may include one or a mixture of two or more of phenoxyethyl (meth)acrylate, benzyl (meth)acrylate, 2-phenylthio-1-ethyl (meth)acrylate, 6-(4,6-dibromo-2-isopropylphenoxy)-1-hexyl (meth)acrylate, 6-(4,6-dibromo-2-sec-butylphenoxy)-1-hexyl (meth)acrylate, 2,6-dibromo-4-nonylphenyl (meth)acrylate, 2,6-dibromo-4-dodecylphenyl (meth)acrylate, 2-(1-naphthyloxy)-1-ethyl (meth)acrylate, 2-(2-naphthyloxy)-1-ethyl (meth)acrylate, 6-(1-naphthyloxy)-1-hexyl (meth)acrylate, 6-(2-naphthyloxy)-1-hexyl (meth)acrylate, 8-(1-naphthyloxy)-1-octyl (meth)acrylate and 8-(2-naphthyloxy)-1-octyl (meth)acrylate, but is not limited thereto.

The ratio of the aromatic group-containing unit is controlled according to the purpose and is not particularly limited, where the unit may be included in the polymer in a range of, for example, about 0.1 to about 45 parts by weight relative to 100 parts by weight of the alkyl (meth)acrylate unit. In another example, the ratio may be about 40 parts by weight or less, 35 parts by weight or less, or about 30 parts by weight or less.

The pressure-sensitive adhesive polymer may further comprise other known units in addition to the above-mentioned units, if necessary.

Such a pressure-sensitive adhesive polymer may be produced by a known polymerization method applying the above-mentioned monomers.

The acrylic polymer may have a weight average molecular weight (Mw) of about 500,000 or more. In the present application, the term weight average molecular weight is a numerical value in terms of standard polystyrene measured by GPC (gel permeation chromatograph), which may also be simply referred to as molecular weight. In another example, the molecular weight (Mw) may be about 600,000 or more, 700,000 or more, 800,000 or more, 900,000 or more, 1,000,000 or more, 1,100,000 or more, 1,200,000 or more, 1,300,000 or more, 1,400,000 or more, or about 1,500,000 or more or so, or may be about 3,000,000 or less, 2,800,000 or less, 2,600,000 or less, 2,400,000 or less, 2,200,000 or less, or about 2,000,000 or less.

The crosslinkable composition according to the appended claims comprises an ionic compound in addition to the polymer. By applying an ionic compound, appropriate conductivity can be imparted depending on the application.

As the ionic compound, a known compound can be used, and for example, a salt which is an ionic compound containing an alkali metal cation can be used. In one example, as the metal cation, a lithium, sodium or potassium cation can be applied, and as a most suitable example, there is a lithium cation.

The kind of the anion contained in the ionic compound is not particularly limited. In one example, the anion may be $PF_6^-$, $AsF^-$, $NO_2^-$, fluoride ($F^-$), chloride ($Cl^-$), bromide ($Br^-$), iodide ($I^-$), perchlorate ($ClO_4^-$), hydroxide ($OH^-$), carbonate ($CO_3^{2-}$), nitrate ($NO_3^-$), trifluoromethanesulfonate ($CF_3SO_3^-$), sulfonate ($SO_4^-$), hexafluorophosphate ($PF_6^-$), methylbenzenesulfonate ($CH_3(C_6H_4)SO_3^-$), p-tolunesulfonate ($CH_3C_6H_4SO_3^-$), tetraborate ($B_4O_7^{2-}$), carboxybenzenesulfonate ($COOH(C_6H_4)SO_3^-$), trifluoromethanesulfinate ($CF_3SO_2^-$), benzoate ($C_6H_5COO^-$), acetate ($CH_3COO^-$), trifluoroacetate ($CF_3COO^-$), tetrafluoroborate ($BF_4^-$), tetrabenzylborate ($B(C_6H_5)_4^-$) and/or trispentafluoroethyl trifluorophosphate ($P(C_2F_5)_3F_3^-$), and the like.

In one example, the ionic compound may also include an anion represented by Formula 2 below or bifluorosulfonylimide, and the like.

[Formula 2] $[X(YO_mR_f)_n]^-$

In Formula 2, X is a nitrogen atom or a carbon atom, Y is a carbon atom or a sulfur atom, $R_f$ is a perfluoroalkyl group, m is 1 or 2, and n is 2 or 3.

In Formula 2, when Y is a carbon atom, m may be 1; when Y is a sulfur atom, m may be 2; when X is a nitrogen atom, n may be 2; and when X is a carbon atom, n may be 3.

$R_f$ in Formula 2 may be a perfluoroalkyl group having 1 to 20 carbon atoms, 1 to 12 carbon atoms, 1 to 8 carbon atoms or 1 to 4 carbon atoms, where the perfluoroalkyl group may have a linear, branched or cyclic structure. The anion of Formula 2 may be a sulfonylmethide-based, sulfonylimide-based, carbonylmethide-based or carbonylimide-based anion, and specifically, may be one or a mixture of two or more of tristrifluoromethanesulfonylmethide, bistrifluoromethanesulfonylimide, bisperfluorobutanesulfonylimide, bispentafluoroethanesulfonylimide, tristrifluoromethanecarbonylmethide, bisperfluorobutane **carbonyl** imide or bispentafluoroethanecarbonylimide, and the like.

As the anion, an anion represented by any one of Formulas 3 to 5 below may also be applied.

[Formula 3] $[OSO_2C_nF_{2n+1}]^-$

[Formula 4] $[N(SO_2C_nF_{2n+1})_2]^-$

[Formula 5] $[C(SO_2C_nF_{2n+1})_2]^-$

In Formulas 3 to 5, n is a number in a range of 0 to 4.

The anions of Formula 2, bis(fluorosulfonyl)imide or the anions of Formula 3 to 5 exhibit high electronegativity due to the perfluoroalkyl group ($R_f$) or the fluoro group, and also form unique resonance structures, thereby having hydrophobicity while forming weak bonds with cations. Accordingly, the ionic compound can impart a high antistatic property even in a small amount, while exhibiting excellent compatibility with other components of the composition such as a polymer.

The ratio of the ionic compound in the crosslinkable composition is not particularly limited, which may be adjusted to an appropriate range in consideration of the desired antistatic property or the like. In one example, the ionic compound may be used in an amount of about 0.001 parts by weight to about 20 parts by weight relative to 100 parts by weight of the acrylic polymer. In one example, the ionic compound in the above range may also be included in a ratio of about 0.005 parts by weight or more, 0.01 parts by weight or more, 0.05 parts by weight or more, 0.1 parts by weight or more, 0.5 parts by weight or more, 1 part by weight or more, 1.5 parts by weight or more, 2 parts by weight or more, 2.5 parts by weight or more, or about 3 parts by weight or more relative to 100 parts by weight of the acrylic polymer. In addition, the ratio may also be about 18 parts by weight or less, 16 parts by weight or less, 14 parts by weight or less, 12 parts by weight or less, 10 parts by weight or less, 8 parts by weight or less, 6 parts by weight or less, 5 parts by weight or less, 4.5 parts by weight or less, or about 4 parts by weight or less. Even when such an excessive amount of ionic compound is applied, the present application can solve the problem of lowering the crosslinking efficiency due to the ionic compound.

The crosslinkable composition according to the appended claims comprises a compound represented by Formula 1 below, in addition to the above components. Such a compound is a component capable of improving the crosslinking efficiency of the crosslinkable composition. The present inventors have confirmed that when the crosslinkable composition contains an ionic compound, particularly a metal cation such as a lithium cation, the cation interacts with a crosslinking component, for example, a crosslinkable functional group of the acrylic polymer or a crosslinking agent, which is described below, to deteriorate the crosslinking efficiency. Therefore, in order to improve the crosslinking efficiency of the crosslinkable composition containing an ionic compound, it is necessary that the metal cation does not inhibit the crosslinking action. The present inventors have confirmed that the compound of Formula 1 can form structurally a complex with the metal cation, thereby realizing a system in which the cation does not interfere with the crosslinking action.

Some of compounds having structures belonging to the category of the compound of Formula 1 below may be applied to a crosslinkable composition such as a pressure-sensitive adhesive composition as a so-called crosslinking retarder. However, in the present application, the compound is not applied as the crosslinking retarder, but is used as a component for accelerating crosslinking, so to speak.

A system in which the relevant component is used as a crosslinking retarder is generally a system comprising a crosslinking agent of metal chelate series or also a metal-containing crosslinking catalyst like metal chelate series, where a compound having a structure of Formula 1 below may be applied together with the crosslinking agent or the crosslinking catalyst. In such a system, the compound acts to retard crosslinking through interaction with at least some of the components of the crosslinking agent or crosslinking catalyst. However, the present application is a system in which the compound of Formula 1 below can inhibit action of the component interfering with the crosslinking, and in particular, when the crosslinking functional group of the acrylic polymer is a carboxyl group and an epoxy compound or an aziridine compound is applied as a crosslinking agent, the system is adjusted so that it can act to prevent deterioration of crosslinking efficiency.

Therefore, the crosslinkable composition of the present application does not contain a metal chelate crosslinking agent and a metal-containing crosslinking catalyst. When such a component is applied together with the compound of Formula 1 below, the effect of improving the crosslinking efficiency as intended in the present application is hardly exerted.

The compound of Formula 1 below can also act to further facilitate the dissociation of the ionic compound so that conductivity can be ensured more smoothly.

[Formula 1]

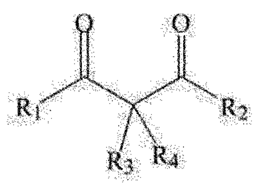

In Formula 1, $R_1$ to $R_4$ are each independently a hydrogen atom or an alkyl group.

As the alkyl group in Formula 1, for example, a linear, branched or cyclic alkyl group having 1 to 20 carbon atoms, 1 to 16 carbon atoms, 1 to 12 carbon atoms, 1 to 8 carbon atoms or 1 to 4 carbon atoms may be applied, and a methyl group or an ethyl group, and the like may also be applied.

The compound of Formula 1 may be variously applied as long as it has structures within the above-defined category, and for example, a compound, wherein in Formula 1, $R_1$ and $R_2$ are each independently an alkyl group having 1 to 4 carbon atoms, such as a methyl group or an ethyl group, and $R_3$ and $R_4$ are each independently a hydrogen atom or an alkyl group having 1 to 4 carbon atoms, for example, a hydrogen atom, a methyl group or an ethyl group, may be used.

In one example, a compound, wherein $R_3$ and $R_4$ are all hydrogen atoms, or at least one is the alkyl group having 1 to 4 carbon atoms, may be used.

The ratio of the compound of Formula 1 in the crosslinkable composition is not particularly limited, but from the viewpoint capable of solving degradation of crosslinking efficiency of the crosslinkable composition, an appropriate ratio can be applied depending on the ratio of the ionic compound which is a component to induce the crosslinking efficiency degradation.

In present claim 1, the compound of Formula 1 is included in a ratio of about 0.01 to about 30 parts by weight relative to 100 parts by weight of the ionic compound. In another example, the ratio of the compound of Formula 1 may be about 0.05 parts by weight or more, 0.1 parts by weight or more, 0.5 parts by weight or more, 0.7 parts by weight or more, 0.75 parts by weight or more, 0.9 parts by weight or more, about 1 part by weight or more, 1.5 parts by weight or more, 2 parts by weight or more, 2.5 parts by weight or more, 3 parts by weight or more, 3.5 parts by weight or more, or about 4 parts by weight or more, or may be about 25 parts by weight or less, 20 parts by weight or less, 15 parts by weight or less, 10 parts by weight or less, or about 5 parts by weight or less. Such a ratio can be appropriately changed depending on the purpose.

The crosslinkable composition according to the appended claims further comprises a crosslinking agent, where the crosslinking agent may be a component that crosslinks the acrylic polymer.

As the crosslinking an epoxy crosslinking agent or an aziridine crosslinking agent is used. In particular, in the case of the crosslinkable composition of the present application, a suitable effect can be exerted when the crosslinkable functional group of the polymer is a carboxyl group and the crosslinking agent is an epoxy or aziridine series among the above types.

The type of crosslinking agent applied in the present application is not particularly limited. For example, as the epoxy crosslinking agent, one or more selected from the group consisting of ethylene glycol diglycidyl ether, triglycidyl ether, trimethylolpropane triglycidyl ether, N,N,N',N'-tetraglycidylethylenediamine and glycerin diglycidyl ether can be used; and as the aziridine crosslinking agent, N,N-toluene-2,4-bis(1-aziridinecarboxamide), N,N'-diphenylmethane-4,4'-bis(1-aziridinecarboxamide), triethylenemelamine, bisisophthaloyl-1-(2-methylaziridine) and tri-1-aziridinylphosphine oxide can be used.

The crosslinking agent may be used in a ratio of about 10 parts by weight or less, or an amount of about 0.001 parts by weight to about 10 parts by weight, relative to 100 parts by weight of the acrylic polymer, and under this ratio, it is possible to prevent deterioration of endurance reliability such as occurrence of interlayer peeling or a lifting phenomenon while maintaining cohesive force of the crosslinked product appropriately. In another example, the ratio of the crosslinking agent may be about 0.005 parts by weight or more, 0.01 parts by weight or more, or about 0.02 parts by weight or more, and may be about 9 parts by weight or less, 8 parts by weight or less, 7 parts by weight or less, 6 parts by weight or less, 5 parts by weight or less, 4 parts by weight or less, 3 parts by weight or less, 2 parts by weight or less, 1.5 parts by weight or less, 1 part by weight or less, 0.5 parts by weight or less, 0.4 parts by weight or less, 0.3 parts by weight or less, 0.2 parts by weight or less, 0.1 parts by weight or less, or about 0.05 part by weight or less.

The crosslinkable composition may further comprise other known additives as needed, in addition to the above-mentioned components. Such an additive can be exemplified by one or more selected from the group consisting of a coupling agent such as a silane coupling agent; an antistatic agent; a tackifier; a ultraviolet stabilizer; an antioxidant; a colorant; a reinforcing agent; a filler; a defoamer; a surfactant; a photopolymerizable compound such as a multifunctional acrylate; and a plasticizer, but is not limited thereto.

Such a crosslinkable composition can be applied to various applications. In one example, the crosslinkable composition can be applied to forming a pressure-sensitive adhesive layer in a pressure-sensitive optical laminate or a surface protective film, and the like.

Thus, the present application relates also to an optical laminate or a surface protective film.

Here, the optical laminate may comprise an optical film; and a pressure-sensitive adhesive layer, which is a crosslinked product of the crosslinkable composition, formed on one surface of the optical film, and in the case of a surface protective film, it may comprise a protective base film; and a pressure-sensitive adhesive layer, which is a crosslinked product of the crosslinkable composition, formed on one surface of the base film.

Here, the constitution contained in the optical laminate or the surface protective film, for example, the type of the optical film or the protective base film is not particularly limited and a known constitution can be used.

For example, as the optical film included in the optical laminate, various types used in various display devices may be included, and for example, the optical film may be a polarizing plate, a polarizer, a polarizer protective film, a retardation film, a viewing angle compensation film or a luminance enhancement film, and the like. In this specification, the term polarizer and polarizing plate refers to subjects that are distinguished from each other. The polarizer refers to a film, sheet or element itself exhibiting a polarization function, and the polarizing plate means an optical element including other elements together with the polarizer. Other elements that can be included in the optical element together with the polarizer can be exemplified by a polarizer protective film or a retardation layer, and the like, but is not limited thereto.

Basically, the polarizer that can be included in the optical film of the present application is not particularly limited. For example, as the polarizer, a polyvinyl alcohol polarizer can be used. The term polyvinyl alcohol polarizer may mean, for example, a resin film of polyvinyl alcohol (hereinafter, may be referred to as PVA) series containing an anisotropic absorbent material such as iodine or a dichroic dye. Such a film can be produced by incorporating an anisotropic absorbent material into a polyvinyl alcohol-based resin film and orienting it by stretching or the like. Here, the polyvinyl alcohol-based resin may include polyvinyl alcohol, polyvinyl formal, polyvinyl acetal or a saponified product of ethylenevinyl acetate copolymer, and the like. The degree of polymerization of the polyvinyl alcohol-based resin may be 100 to 5,000 or 1,400 to 4,000 or so, but is not limited thereto.

Such a polyvinyl alcohol polarizer can be produced, for example, by performing at least a dyeing process, a crosslinking process and a stretching process on a PVA-based film. In the dyeing step, the crosslinking step and the stretching step, respective treating baths of a dyeing bath, a crosslinking bath and a stretching bath are used, where these respective treating baths can be used by a treating solution according to each process.

In the dyeing process, the anisotropic absorbent material can be adsorbed and/or oriented on the PVA-based film. Such a dyeing process can be performed together with the stretching process. The dyeing can be performed by immersing the film in a solution containing an anisotropic absorbent material, for example, an iodine solution. As the iodine solution, for example, an aqueous solution or the like containing iodine, and iodine ions by an iodinated compound as a dissolution aid may be used. As the iodinate compound, for example, potassium iodide, lithium iodide, sodium iodide, zinc iodide, aluminum iodide, lead iodide, copper iodide, barium iodide, calcium iodide, tin iodide or titanium iodide, and the like may be used. The concentration of iodine and/or iodine ions in the iodine solution can be adjusted in consideration of the desired optical characteristics of the polarizer, and such an adjustment method is known. In the dyeing process, the temperature of the iodine solution is usually 20°C to 50°C or 25°C to 40°C or so, and the immersion time is usually 10 seconds to 300 seconds or 20 seconds to 240 seconds or so, but is not limited thereto.

The crosslinking process performed during the production process of the polarizer can be performed, for example, using a crosslinking agent such as a boron compound. The order of the crosslinking process is not particularly limited, which can be performed, for example, together with the dyeing and/or drawing process or can proceed separately. The crosslinking process may also be performed several times. As the boron compound, boric acid or borax, and the like may be used. The boron compound can be generally used in the form of an aqueous solution or a mixed solution of water and an organic solvent, and usually an aqueous solution of boric acid is used. The boric acid concentration in the boric acid aqueous solution can be selected in an appropriate range in consideration of the degree of crosslinking and the resulting heat resistance, and the like. The iodinated compound such as potassium iodide can also be contained in an aqueous boric acid solution or the like.

The crosslinking process can be performed by immersing the PVA-based film in an aqueous boric acid solution or the like, where in this process, the treatment temperature is usually in a range of 25°C or higher, 30°C to 85°C or 30°C to 60°C or so and the treatment time is usually 5 seconds to 800 seconds or 8 seconds to 500 seconds or so.

The stretching process is generally performed by uniaxial stretching. Such stretching may also be performed together with the dyeing and/or crosslinking process. The stretching method is not particularly limited, and for example, a wet stretching method can be applied. In such a wet stretching method, for example, stretching after dyeing is generally performed, but stretching may be performed with crosslinking, and may also be performed several times or in multiple stages.

The iodinated compound such as potassium iodide can be contained in the treatment liquid applied to the wet stretching method, and in this process, a light blocking rate can also be controlled through adjusting the ratio. In the stretching, the treatment temperature is usually in the range of 25°C or higher, 30°C to 85°C or 50°C to 70°C, and the treatment time is usually 10 seconds to 800 seconds or 30 seconds to 500 seconds, without being limited thereto.

In the stretching process, the total draw ratio can be controlled in consideration of orientation characteristics and the like, and the total draw ratio may be 3 times to 10 times, 4 times to 8 times or 5 times to 7 times or so based on the original length of the PVA-based film, but is not limited thereto. Here, in the case of involving stretching a swelling process or the like other than the stretching process, the total draw ratio may mean the cumulative draw ratio including the stretching in each process. Such a total draw ratio can be adjusted to an appropriate range in consideration of orientation characteristics, processability or stretching cuttability of the polarizer, and the like.

In the production process of the polarizer, in addition to the dyeing, crosslinking and stretching, the swelling process may also be performed before performing the above process. The contamination of the surface of the PVA-based film or an antiblocking agent can be cleaned by swelling, whereby there is also an effect capable of reducing unevenness such as dyeing deviations.

In the swelling process, water, distilled water or pure water, and the like can be usually used. The main component of the relevant treatment liquid is water, and if necessary, an iodinated compound such as potassium iodide or an additive such as a surfactant, or an alcohol, and the like can be included in a small amount. In this process, the above-described light blocking rate can also be controlled through control of process variables.

The treatment temperature in the swelling process is usually 20°C to 45°C or 20°C to 40°C or so, but is not limited thereto. Since swelling deviations can cause dyeing deviations, process variables can be adjusted so that the occurrence of such swelling deviations is suppressed as much as possible.

If necessary, appropriate stretching can also be performed in the swelling process. The draw ratio may be 6.5 times or less, 1.2 to 6.5 times, 2 times to 4 times, or 2 times to 3 times, based on the original length of the PVA-based film. The stretching in the swelling process can control the stretching in the stretching process performed after the swelling process to be small, and it can control so that the stretching failure of the film does not occur.

In the production process of the polarizer, metal ion treatment can be performed. This treatment is performed, for example, by immersing the PVA-based film in an aqueous solution containing a metal salt. This allows metal ions to be contained in the polarizer, and in this process, the color tone of the PVA-based polarizer can be controlled by controlling the kind or ratio of metal ions. The applicable metal ions can be exemplified by metal ions of a transition metal such as cobalt, nickel, zinc, chromium, aluminum, copper, manganese or iron, and it may be possible to control the color tone by selecting an appropriate type of these.

In the production process of the polarizer, the cleaning process may proceed after dyeing, crosslinking and stretching. This cleaning process can be performed by a solution of an iodinated compound such as potassium iodide, and in this process, the above-described light blocking rate can be controlled through the concentration of the iodinated compound in the solution or the treatment time of the cleaning process, and the like. Therefore, the concentration of the iodinated compound and the treatment time with the solution can be adjusted in consideration of the light blocking rate. However, the cleaning process may also be performed using water.

Such cleaning with water and cleaning with the iodinated compound solution may also be combined, or a solution in which a liquid alcohol such as methanol, ethanol, isopropyl alcohol, butanol or propanol is blended may also be used.

After these processes, the polarizer can be produced by performing a drying process. The drying process can be performed at an appropriate temperature for an appropriate time, for example, in consideration of the moisture content and the like required for the polarizer, where such conditions are not particularly limited.

The thickness of such a polarizer is not particularly limited and the polarizer may be formed to have an appropriate thickness depending on the purpose. Typically, the thickness of the polarizer may be in a range of 5 μm to 80 μm, but is not limited thereto.

Among physical properties mentioned in this specification, when the measured temperature and/or pressure affects the physical property value, the relevant physical property means a physical property measured at room temperature and/or normal pressure, unless otherwise specified.

In this specification, the term room temperature is a natural temperature without warming or cooling, which may mean one temperature in a range of about 10°C to 30°C, for example, a temperature of 25°C or 23°C or so.

In the present application, the term normal pressure is a pressure when the pressure is not particularly reduced or increased, which may be 1 atmosphere or so, such as normal atmospheric pressure.

The present application also relates to a display device comprising such an optical laminate. The device may comprise, for example, a display panel to which the optical laminate is attached via the above-mentioned pressure-sensitive adhesive layer. Here, the type of the display panel is not particularly limited, which may be, for example, a known LCD panel or OLED panel, and the like. Furthermore, the position or the like where the optical laminate is attached to the panel can also follow a known manner.

## Advantageous Effects

The present application relates to a crosslinkable composition. The present application can provide a crosslinkable composition without degradation of crosslinking efficiency while exhibiting conductivity by containing an ionic compound, and its use.

## Brief Description of Drawings

Figure 1 is a view showing the NMR measurement results for confirming the effect of the present application.

## Mode for Invention

Hereinafter, the present application will be specifically described by way of examples, but the scope of the present application is not limited by the following examples.

### 1. Measurement method of curing rate

The curing rate was evaluated through a gel fraction. After crosslinkable compositions prepared in Examples or Comparative Examples were each coated to an appropriate thickness, it was maintained at a temperature of about 120°C for 3 minutes or so and then again maintained at 50°C for 3 days to form a crosslinked layer, and then the relevant crosslinked layer was maintained in a constant temperature and humidity room (23°C, 50% relative humidity) for 7 days. Thereafter, about 0.2 g (= A in the gel fraction determination equation) was collected from the crosslinked layer. The collected crosslinked product was completely immersed in 50 mL of ethyl acetate and then stored in a dark room at room temperature for 1 day. Subsequently, a portion that was not dissolved in ethyl acetate (undissolved portion) was collected in a #200 stainless steel wire net, which was dried at 150°C for 30 minutes to measure the mass (dry mass of undissolved portion = B in the gel fraction measurement equation). Subsequently, the gel fraction (unit: %) was determined by substituting the measurement result into the following equation.

<Gel fraction determination equation>

$$\text{Gel fraction} = B/A \times 100$$

A: mass (0.2 g) of the pressure-sensitive adhesive

B: dry mass of undissolved portion (unit: g)

### 2. Surface resistance measurement method

The surface resistance was confirmed by a probe method using a surface resistance meter from Mitsubishi. Also, the high temperature surface resistance was evaluated in the above manner after the crosslinked layer was maintained at 80°C for about 120 hours, and the moist-heat resistant surface resistance was evaluated in the above manner after the crosslinked layer was maintained at a temperature of 60°C and 90% relative humidity for about 240 hours.

### 3. NMR measurement method

NMR was confirmed by Li NMR using a Bruker 500 MHz NMR instrument.

### Preparation Example 1. Preparation of pressure-sensitive adhesive polymer (A)

To an 1L reactor in which a nitrogen gas was refluxed and a cooling apparatus was installed for easy temperature control, n-butyl acrylate (n-BA) and acrylic acid (AA) were introduced in a weight ratio of 95:5 (n-BA: AA), and 100 parts by weight of ethyl acetate (EAc) was introduced thereto as a solvent. Subsequently, after the nitrogen gas was purged for 1 hour in order to remove oxygen, 0.03 parts by weight of azobisisobutyronitrile (AIBN) diluted in ethyl acetate to a concentration of 50 wt% was introduced thereto as a reaction initiator and reacted for 8 hours to prepare a copolymer (A) having a molecular weight ( Mw) of about 1,800,000 or so.

### Example 1

An epoxy crosslinking agent (T-743L, Soken Co., Japan) was combined with the copolymer (A) of Preparation Example 1 in a ratio of about 0.037 parts by weight relative to 100 parts by weight of the solid content of the copolymer (A), LiTFSI (lithium bis(trifluoromethanesulfonylimide) as an ionic compound was combined in a ratio of about 0.74 parts by weight relative to 100 parts by weight of the solid content of the copolymer (A), and then acetylacetone was again combined in a ratio of about 0.03 parts by weight relative to 100 parts by weight of the solid content of the copolymer (A) to prepare a crosslinkable composition.

**Example 2**

The process was performed in the manner based on Example 1, but LiTFSI (lithium bis(trifluoromethanesulfonylimide)) as an ionic compound was combined in a ratio of about 3.7 parts by weight relative to 100 parts by weight of the solid content of the copolymer (A) of Preparation Example 1 and acetylacetone was combined in a ratio of about 0.03 parts by weight relative to 100 parts by weight of the solid content of the copolymer (A) to prepare a crosslinkable composition.

**Example 3**

The process was performed in the manner based on Example 1, but LiTFSI (lithium bis(trifluoromethanesulfonylimide)) as an ionic compound was combined in a ratio of about 3.7 parts by weight relative to 100 parts by weight of the solid content of the copolymer (A) of Preparation Example 1 and acetylacetone was combined in a ratio of about 0.15 parts by weight relative to 100 parts by weight of the solid content of the copolymer (A) to prepare a crosslinkable composition.

**Comparative Example 1**

A crosslinkable composition was prepared in the same manner as in Example 1, except that the ionic compound and acetylacetone were not applied.

**Comparative Example 2**

A crosslinkable composition was prepared in the same manner as in Example 1, except that acetylacetone was not combined.

**Comparative Example 3**

A crosslinkable composition was prepared in the same manner as in Example 2, except that acetylacetone was not combined.

The curing rate and surface resistance value measured for each crosslinkable composition are summarized in Table 1 below.

[Table 1]

| | Curing Rate | Surface Resistance (room temperature) | Surface Resistance (high temperature) | Surface Resistance (moist-heat resistant) |
|---|---|---|---|---|
| Example 1 | 85.3% | 2.64E11 | 5.13 E11 | 1.47 E11 |
| Example 2 | 45.5% | 1.08 E10 | 2.98 E10 | 7.55 E9 |
| Example 3 | 80% | 9.99 E9 | 2.38 E10 | 7.15 E9 |
| Comparative Example 1 | 81.5% | Over Range | Over Range | 1.17 E12 |
| Comparative Example 2 | 78.9% | 3.14 E11 | 6.32 E11 | 1.63 E11 |
| Comparative Example 3 | 0% | 1.17 E10 | 2.57 E10 | 1.08E10 |

**Review of results**

As a result of measuring the curing rate of each of the crosslinkable compositions of Examples 1 to 3 and Comparative Examples 1 to 3 in the above-mentioned manner, Examples 1 to 3 were 85.3%, 45.5% and 80%, respectively, and Comparative Examples 1 to 3 were 81.5%, 78.9% and 0%, respectively.

Among the results, Comparative Example 1 exhibits a high curing rate in the state that the ionic compound is not included, whereas it can be seen that when comparing with the results of Comparative Examples 2 and 3, as the addition amount of the ionic compound is increased, the curing rate is decreased, and thus it can be confirmed that the

ionic compound causes a decrease in the crosslinking efficiency and in particular, when a considerable amount of the ionic compound is combined as in Comparative Example 3, the crosslinking is rarely achieved.

However, it can be confirmed that when the acetylacetone corresponding to the compound of Formula 1 is combined in the same composition as those of Comparative Examples 2 and 3 above (Examples 1 to 3), the curing rate is greatly increased.

These results can also be verified by NMR measurement, which will be described with reference to Figure 1 as follows.

In Figure 1, the lowermost NMR result is the result measured after LiTFSI, which is an ionic compound used in Examples and Comparative Examples, is solely dissolved in a solvent of ethyl acetate, and the uppermost NMR is the result measured by combining the same epoxy crosslinking agent as applied in Examples and Comparative Examples.

Comparing the two results, it can be seen that if the epoxy crosslinking agent is added to LiTFSI, the peak shifts to a down field. In Figure 1, the second NMR from the top is the case where acetylacetone is added to a solution containing LiTFSI and the epoxy crosslinking agent so that the volume ratio thereof to the epoxy crosslinking agent is 1:0.25 (epoxy crosslinking agent: acetylacetone), and the third NMR is the result measured after being added so that the volume ratio is about 1:0.5 (epoxy crosslinking agent: acetylacetone). Looking at the drawing, it is confirmed that as acetylacetone is added, the peak again shifts to an upfield, whereby it can be confirmed that the phenomenon of interfering with the crosslinking reaction is solved through interaction of LiTFSI with acetylacetone.

## Claims

1. A crosslinkable composition comprising an acrylic polymer; an ionic compound having an alkali metal cation; and a compound represented by Formula 1 below,

   wherein the acrylic polymer further comprises a crosslinkable functional group-containing monomer unit, wherein the crosslinkable functional group is a carboxyl group,
   wherein the crosslinkable composition further comprises an epoxy crosslinking agent or an aziridine crosslinking agent,
   wherein the crosslinkable composition does not include a metal chelate crosslinking agent and a metal-containing crosslinking catalyst,
   wherein the compound represented by Formula 1 below is contained in an amount of 0.01 to 30 parts by weight based on 100 parts by weight of the ionic compound:

   [Formula 1]

   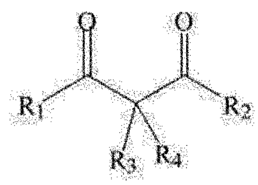

   wherein, $R_1$ to $R_4$ are each independently a hydrogen atom or an alkyl group.

2. The crosslinkable composition according to claim 1, wherein the acrylic polymer comprises an alkyl (meth)acrylate unit.

3. The crosslinkable composition according to claim 1, wherein the alkali metal cation is a lithium cation.

4. The crosslinkable composition according to claim 1, wherein the ionic compound comprises an anion of Formula 2 below:

   [Formula 2] $[X(YO_mR_f)_n]^-$

   wherein, X is a nitrogen atom or a carbon atom, Y is a carbon atom or a sulfur atom, $R_f$ is a perfluoroalkyl group, m is 1 or 2, and n is 2 or 3.

5. The crosslinkable composition according to claim 1, wherein the ionic compound is an anion represented by any one of Formulas 3 to 5 below:

[Formula 3] $[OSO_2C_nF_{2n+1}]^-$

[Formula 4] $[N(SO_2C_nF_{2n+1})_2]^-$

[Formula 5] $[C(SO_2C_nF_{2n+1})_2]^-$

wherein, n is a number in a range of 0 to 4.

6. The crosslinkable composition according to claim 1, wherein the ionic compound is contained in an amount of 0.001 to 20 parts by weight relative to 100 parts by weight of the acrylic polymer.

7. The crosslinkable composition according to claim 1, wherein the ionic compound is contained in a ratio of 3 parts by weight or more relative to 100 parts by weight of the acrylic polymer.

8. The crosslinkable composition according to claim 1, wherein in Formula 1, $R_1$ and $R_2$ are each independently an alkyl group having 1 to 4 carbon atoms, and $R_3$ and $R_4$ are each independently a hydrogen atom or an alkyl group having 1 to 4 carbon atoms.

9. The crosslinkable composition according to claim 8, wherein any one of $R_3$ and $R_4$ is a hydrogen atom and the other is an alkyl group having 1 to 4 carbon atoms.

10. The crosslinkable composition according to claim 1, wherein the crosslinking agent is contained in a ratio of 10 parts by weight or less relative to 100 parts by weight of the acrylic polymer.

11. The crosslinkable composition according to claim 1, wherein the crosslinking agent is contained in a ratio of 1 part by weight or less relative to 100 parts by weight of the acrylic polymer.

12. An optical laminate comprising an optical film; and a pressure-sensitive adhesive layer formed on one surface of the optical film and having a crosslinked product of the crosslinkable composition of claim 1.

13. A surface protective film comprising a protective base film; and a pressure-sensitive adhesive layer formed on one surface of the base film and having a crosslinked product of the crosslinkable composition of claim 1.

14. A display device comprising a display panel to which the optical laminate of claim 12 is attached via the pressure-sensitive adhesive layer.

## Patentansprüche

1. Vernetzbare Zusammensetzung, umfassend ein Acrylpolymer; eine ionische Verbindung aufweisend ein Alkalimetallkation; und eine Verbindung, dargestellt durch nachstehende Formel 1,

wobei das Acrylpolymer weiter eine vernetzbare funktionelle Gruppe enthaltende Monomereinheit umfasst, wobei die vernetzbare funktionelle Gruppe eine Carboxylgruppe ist,
wobei die vernetzbare Zusammensetzung weiter ein Epoxid-Vernetzungsmittel oder ein Aziridin-Vernetzungsmittel umfasst,
wobei die vernetzbare Zusammensetzung kein Metallchelat-Vernetzungsmittel und keinen metallhaltigen Vernetzungskatalysator einschließt,
wobei die Verbindung, dargestellt durch nachstehende Formel 1, in einer Menge von 0,01 bis 30 Gewichtsteilen, basierend auf 100 Gewichtsteilen der ionischen Verbindung, enthalten ist:

[Formel 1]

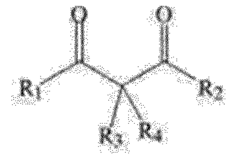

wobei $R_1$ bis $R_4$ jeweils unabhängig voneinander ein Wasserstoffatom oder eine Alkylgruppe sind.

2. Vernetzbare Zusammensetzung nach Anspruch 1, wobei das Acrylpolymer eine Alkyl(meth)acrylat-Einheit umfasst.

3. Vernetzbare Zusammensetzung nach Anspruch 1, wobei das Alkalimetallkation ein Lithiumkation ist.

4. Vernetzbare Zusammensetzung nach Anspruch 1, wobei die ionische Verbindung ein Anion nachstehender Formel 2 umfasst:

[Formel 2] $[X(YO_mR_f)_n]^-$

wobei X ein Stickstoffatom oder ein Kohlenstoffatom ist, Y ein Kohlenstoffatom oder ein Schwefelatom ist, $R_f$ eine Perfluoralkylgruppe ist, m 1 oder 2 ist und n 2 oder 3 ist.

5. Vernetzbare Zusammensetzung nach Anspruch 1, wobei die ionische Verbindung ein Anion ist, das durch eine von nachstehenden Formeln 3 bis 5 dargestellt wird:

[Formel 3] $[OSO_2C_nF_{2n+1}]^-$

[Formel 4] $[N(SO_2C_nF_{2n+1})_2]^-$

[Formel 5] $[C(SO_2C_nF_{2n+1})_2]^-$

wobei n eine Zahl im Bereich von 0 bis 4 ist.

6. Vernetzbare Zusammensetzung nach Anspruch 1, wobei die ionische Verbindung in einer Menge von 0,001 bis 20 Gewichtsteilen, bezogen auf 100 Gewichtsteile des Acrylpolymers, enthalten ist.

7. Vernetzbare Zusammensetzung nach Anspruch 1, wobei die ionische Verbindung in einem Verhältnis von 3 Gewichtsteilen oder mehr relativ zu 100 Gewichtsteilen des Acrylpolymers enthalten ist.

8. Vernetzbare Zusammensetzung nach Anspruch 1, wobei in Formel 1 $R_1$ und $R_2$ jeweils unabhängig voneinander eine Alkylgruppe mit 1 bis 4 Kohlenstoffatomen sind und $R_3$ und $R_4$ jeweils unabhängig voneinander ein Wasserstoffatom oder eine Alkylgruppe mit 1 bis 4 Kohlenstoffatomen sind.

9. Vernetzbare Zusammensetzung nach Anspruch 8, wobei einer der Reste $R_3$ und $R_4$ ein Wasserstoffatom und der andere eine Alkylgruppe mit 1 bis 4 Kohlenstoffatomen ist.

10. Vernetzbare Zusammensetzung nach Anspruch 1, wobei das Vernetzungsmittel in einem Verhältnis von 10 Gewichtsteilen oder weniger relativ zu 100 Gewichtsteilen des Acrylpolymers enthalten ist.

11. Vernetzbare Zusammensetzung nach Anspruch 1, wobei das Vernetzungsmittel in einem Verhältnis von 1 Gewichtsteil oder weniger relativ zu 100 Gewichtsteilen des Acrylpolymers enthalten ist.

12. Optisches Laminat, umfassend einen optischen Film; und eine druckempfindliche Klebeschicht, die auf einer Oberfläche des optischen Films gebildet ist und ein vernetztes Produkt der vernetzbaren Zusammensetzung nach Anspruch 1 aufweist.

13. Oberflächenschutzfilm, umfassend einen schützenden Basisfilm; und eine druckempfindliche Klebeschicht, die auf einer Oberfläche des Basisfilms gebildet ist und ein vernetztes Produkt der vernetzbaren Zusammensetzung nach

Anspruch 1 aufweist.

**14.** Anzeigevorrichtung, umfassend ein Anzeigefeld, an dem das optische Laminat nach Anspruch 12 über die druckempfindliche Klebeschicht befestigt ist.

**Revendications**

**1.** Composition réticulable comprenant un polymère acrylique ; un composé ionique présentant un cation de métal alcalin ; et un composé représenté par la Formule 1 ci-dessous,

dans laquelle le polymère acrylique comprend en outre un motif monomère contenant un groupe fonctionnel réticulable, dans laquelle le groupe fonctionnel réticulable est un groupe carboxyle,
dans laquelle la composition réticulable comprend en outre un agent de réticulation époxy ou un agent de réticulation aziridine,
dans laquelle la composition réticulable n'inclut pas d'agent de réticulation de chélate métallique ni de catalyseur de réticulation contenant un métal,
dans laquelle le composé représenté par la Formule 1 ci-dessous est présent en une quantité de 0,01 à 30 parties en poids sur la base de 100 parties en poids du composé ionique :

[Formule 1]

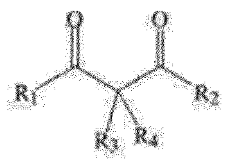

dans laquelle $R_1$ à $R_4$ sont chacun indépendamment un atome d'hydrogène ou un groupe alkyle.

**2.** Composition réticulable selon la revendication 1, dans laquelle le polymère acrylique comprend un motif de (méth)acrylate d'alkyle.

**3.** Composition réticulable selon la revendication 1, dans laquelle le cation de métal alcalin est un cation de lithium.

**4.** Composition réticulable selon la revendication 1, dans laquelle le composé ionique comprend un anion de Formule 2 ci-dessous :

[Formule 2] $[X(YO_mR_f)_n]^-$

dans laquelle, X est un atome d'azote ou un atome de carbone, Y est un atome de carbone ou un atome de soufre, $R_f$ est un groupe perfluoroalkyle, m vaut 1 ou 2 et n vaut 2 ou 3.

**5.** Composition réticulable selon la revendication 1, dans laquelle le composé ionique est un anion représenté par l'une quelconque des Formules 3 à 5 ci-dessous :

[Formule 3] $[OSO_2C_nF_{2n+1}]^-$

[Formule 4] $[N(SO_2C_nF_{2n+1})_2]^-$

[Formule 5] $[C(SO_2C_nF_{2n+1})_2]^-$

dans laquelle, n est un nombre dans une plage de 0 à 4.

**6.** Composition réticulable selon la revendication 1, dans laquelle le composé ionique est présent en une quantité de 0,001 à 20 parties en poids par rapport à 100 parties en poids du polymère acrylique.

**7.** Composition réticulable selon la revendication 1, dans laquelle le composé ionique est présent en un rapport de 3

parties en poids ou plus par rapport à 100 parties en poids du polymère acrylique.

**8.** Composition réticulable selon la revendication 1, dans laquelle dans la Formule 1, $R_1$ et $R_2$ sont chacun indépendamment un groupe alkyle présentant 1 à 4 atomes de carbone, et $R_3$ et $R_4$ sont chacun indépendamment un atome d'hydrogène ou un groupe alkyle présentant 1 à 4 atomes de carbone.

**9.** Composition réticulable selon la revendication 8, dans laquelle l'un quelconque de $R_3$ et $R_4$ est un atome d'hydrogène et l'autre est un groupe alkyle présentant 1 à 4 atomes de carbone.

**10.** Composition réticulable selon la revendication 1, dans laquelle l'agent de réticulation est présent en un rapport de 10 parties en poids ou moins par rapport à 100 parties en poids du polymère acrylique.

**11.** Composition réticulable selon la revendication 1, dans laquelle l'agent de réticulation est présent en un rapport de 1 partie en poids ou moins par rapport à 100 parties en poids du polymère acrylique.

**12.** Stratifié optique comprenant un film optique ; et une couche adhésive sensible à la pression formée sur une surface du film optique et présentant un produit réticulé de la composition réticulable selon la revendication 1.

**13.** Film protecteur de surface comprenant un film protecteur de base ; et une couche adhésive sensible à la pression formée sur une surface du film de base et présentant un produit réticulé de la composition réticulable selon la revendication 1.

**14.** Dispositif d'affichage comprenant un panneau d'affichage auquel le stratifié optique selon la revendication 12 est fixé par le biais de la couche adhésive sensible à la pression.

[Figure 1]

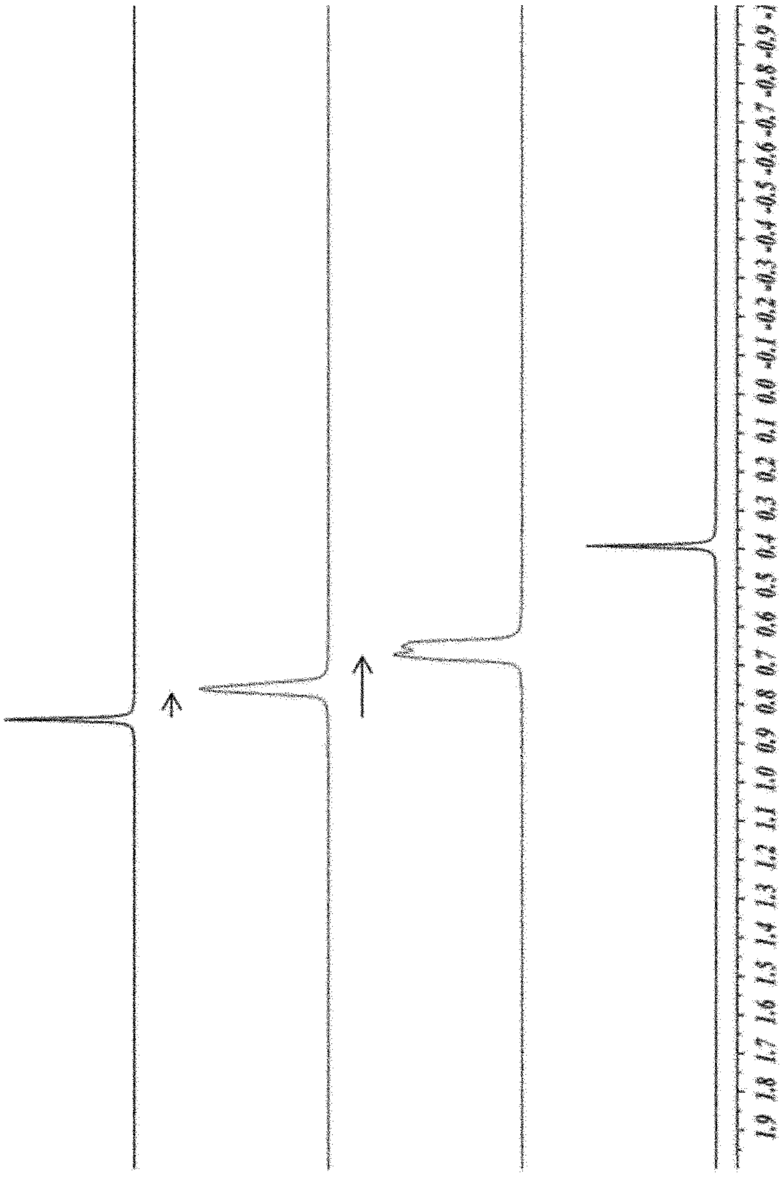

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2005165146 A1
- JP H08259922 A
- JP 2005247909 A
- US 2015093533 A1
- EP 2889351 A1